# EUROPÄISCHE PATENTSCHRIFT

(11) **EP 1 373 150 B1**
(45) Veröffentlichungstag und Bekanntmachung des Hinweises auf die Patenterteilung: **17.11.2004**
(21) Anmeldenummer: 02757729.5
(22) Anmeldetag: 28.03.2002
(51) Int. Cl.: C03B 1/00

(54) **BESCHLEUNIGUNG DES EINSCHMELZENS UND BESSERE PROZESSSTEUERBARKEIT**
FUSING ACCELERATION AND IMPROVED PROCESS CONTROL
ACCELERATION DE LA FUSION ET AMELIORATION APPORTEE A LA COMMANDE DE PROCESSUS

(30) Priorität: 31.03.2001 DE 10116293
(43) Veröffentlichungstag der Anmeldung: 02.01.2004
(73) Patentinhaber: Schott AG, 55122 Mainz (DE)
(72) Erfinder: LOCH, Horst, 65527 Niedernhausen (DE); MUSCHICK, Wolfgang, 55257 Budenheim (DE); ILLING, Petra, 55283 Nierstein/Schwabsburg (DE); SCHMITT, Stefan, 55271 Stadecken-Elsheim (DE)
(74) Vertreter: Dr. Weitzel & Partner
(86) Internationale Anmeldenummer: PCT/EP2002/003532
(87) Internationale Veröffentlichungsnummer: WO 2002/079107

(56) Entgegenhaltungen:
- DE-C- 4 313 217
- US-A- 3 268 320
- ORLOV D L: "GLASS MELTING PROBLEMS" , SURVEY OF CONTEMPORARY GLASS SCIENCE AND TECHNOLOGY. LENINGRAD, JULY 2 - 7, 1989, PROCEEDINGS OF THE INTERNATIONAL CONGRESS ON GLASS, LENINGRAD, NAUKA, RU, VOL. SURVEY PAPERS. CONGRESS 15, PAGE(S) 442-468 XP000075339 Seite 457 -Seite 458
- SOVIET INVENTIONS ILLUSTRATED Section Ch, Week 9032 Derwent Publications Ltd., London, GB; Class L01, AN 90-245158 XP002209963 & SU 1 539 170 A (VLADIMIR POLY), 30. Januar 1990 (1990-01-30)

## Beschreibung

Die Erfindung betrifft ein Verfahren sowie eine Vorrichtung zum Herstellen und/oder Aufbereiten einer Glasschmelze.

Die Grundzüge eines Glasherstellungsprozesses sind aus einer Vielzahl von Druckschriften bekannt. Zunächst wird in einer Wanne oder einem Tiegel aus einem Gemenge oder aus Glasscherben eine Glasschmelze hergestellt. Die Glasschmelze wird sodann geläutert. Der Schritt des Läuterns findet häufig zu einem wesentlichen Teil bereits in der Schmelzwanne selbst statt. Im Allgemeinen ist aber noch ein Läutergefäß - Wanne oder Tiegel - nachgeschaltet. Es schließen sich Leitungen an, die entweder offene Gerinne oder geschlossene Rohrleitungen sein können. Dabei können Beruhigungsgefäße und Rührbehälter zwischen- oder nachgeschaltet sein. Nur beispielsweise wird verwiesen auf DE 199 39 785 A1.

Das Einschmelzen von Glasgemenge lässt sich in zwei Hauptphasen unterteilen. In der sogenannten Silikatbildungsphase reagieren bestimmte Komponenten des Glasgemenges ab einer bestimmten Temperatur, wobei leicht flüssige Primärschmelzen entstehen. Schwerer schmelzende Bestandteile wie Sand bilden mit diesen Primärschmelzen Silikate.

In einer zweiten Phase findet die sogenannte Rauhschmelze statt. Dabei dienen die Silikate als Aufschlussmittel der übrigen Bestandteile.

Die Zeitdauer dieser chemischen Reaktionen ist vor allem durch die Kinetik des Wärmetransportes bestimmt. In das Gemenge und in die Schmelze wird Wärme eingebracht, beispielsweise durch Beheizung aus dem Oberofenraum oder durch direkte elektrische Beheizung mittels Elektroden. In einer achssenkrechten Ebene gesehen, bildet sich in der entstehenden Schmelze eine umlaufende Strömung aus, und zwar nach Art einer Walze mit horizontaler Achse. Diese Strömung wird im Folgenden "Walze" genannt. Die Walze hat an sich eine günstige Wirkung. Sie fördert bereits stark erhitzte Volumenelemente der Glasschmelze unter das Gemenge zurück und erleichtert damit dessen kontinuierliches Abschmelzen von unten her. Die ungelösten Bestandteile werden in der Rauhschmelze gelöst. Erst nach dem vollständigen Abschluss dieser Phase kann die Läuterung erfolgreich beendet werden. Wichtig ist, dass alle Blasen entfernt werden. Gerade bei Spezialgläsem ist der Gehalt an Blasen äußerst unerwünscht. Je rascher die Rauhschmelze abläuft, desto höher ist die Qualität und die Wannenausbeute. Trotzdem darf der Energieeintrag beim Einschmelzen von Gemenge oder von Glasscherben ein bestimmtes Maß nicht überschreiten. Andernfalls würde dies zu einem vorzeitigen Aktivieren von Läutermitteln führen, so dass diese während der eigentlichen Läuterphase nicht mehr zur Verfügung stünden.

Die genannten Strömungswalzen werden primär durch thermische Differenzen ausgelöst. Es ist bekannt, dass die Intensität dieser Walzen durch Einblasen von Gas beeinflusst werden kann. Dabei werden beispielsweise am Boden einer Einschmelzwanne Gasdüsen in einer Reihe angeordnet. Die Reihe verläuft dabei quer zur Hauptströmungsrichtung der Glasschmelze. Es wird gewissermaßen ein Vorhang aus Gasstrahlen erzeugt. Als Gase werden zum Beispiel Luft oder Sauerstoff verwendet. Die Düsen sind derart beschaffen, dass verhältnismäßig große Blasen entstehen, die rasch zur Oberfläche hochsteigen und somit nicht in der Schmelze verbleiben. DE 43 13 217 C1 zeigt eine Glasschmelze mit den Merkmallen, die im Oberbegriff der unabhängigen Ansprüche zusammengefaßt sind,

Der Erfindung liegt die Aufgabe zugrunde, die genannten Verfahren des Erschmelzens von Giasschmelzen zu verbessern, Insbesondere sollen die Prozesseffizienz und die Prozessführung verbessert werden.

Diese Aufgabe wird durch die Merkmale der unabhängigen Ansprüche gelöst.

Bevorzugte Ausführungen gemäß der Erfindung sind in den abhängigen Ansprüchen 2-5 und 8-13 definiert.

Die Erfinder haben Folgendes erkannt:
Beim Erzeugen einer thermisch induzierten Konfektion in Gestalt von Walzen gelangen solche Volumenelemente der Glasschmelze, die bereits genügend Wärmebehandlung erfahren haben, an die Oberfläche des Schmelzbades, wo sie erneut einer Wärmebehandlung ausgesetzt werden. Sie werden somit nutzlos umgewälzt. Andere Volumenelemente hingegen gelangen während längerer Zeitspannen nicht zur Oberfläche und unterliegen daher nicht der Wärmeeinwirkung, obwohl dies nötig wäre. Die Verweildauer in der betreffenden Wanne muss daher derart bemessen werden, dass die Wärmeeinwirkung auch die zuletzt genannten Volumenelemente erfasst.

Ein weiterer Nachteil des Prinzips "thermisch induzierte Walze" besteht in Folgendem: Ändert sich ein bestimmter Parameter, zum Beispiel die Temperatur, an einer bestimmten Stelle ein wenig, so kann sich dies aufgrund der Konfektion in der Wanne an einer anderen Stelle erheblich auswirken. Eine Änderung an einer Stelle macht es daher schwierig, Veränderungen an einer anderen Stelle vorherzusehen. Ein bestimmtes Volumenelement erlebt auf seinem Strömungsweg große Temperaturunterschiede, die nicht beliebig einstellbar sind. Das System ist daher hochgradig "nicht-linear".

Ein weiterer Nachteil des konventionellen Systems liegt in der schlechten Energiebilanz. Die genannte, systembedingte große Zeitdauer der Behandlung bedeutet, dass auch viel Wärme durch Wandverluste verloren geht.

Die Erfinder haben einen völlig neuen Weg beschritten. Sie erzeugen die notwendige Konfektion weitgehend dadurch, dass sie Mediumstrahlen in die Schmelze einleiten, und dass sie dabei die Strahlen derart anordnen, dass sich in der Glasschmelze eine spiralige Strömung mit Achse in Prozessrichtung ausbildet, die langsam zum Auslauf hinwandert. Diese Spiralströmung wird primär erzeugt durch den mechanischen Impuls der Blasdüsen, während es beim Stande der Technik vor allem die Temperaturgradienten sind, die die genannten Walzen erzeugen. Damit ist eine Entkoppelung vorgenommen zwischen dem an sich notwendigen Energieeintrag in Form von Wärme einerseits, und dem Erzeugen von Geschwindigkeitsgradienten andererseits.
DE 43 13 217 C1 betrifft das Läutern einer Glasschmelze. Auch hierbei werden Glasblasen mittels Bubblingdüsen in die flüssige Schmelze eingebracht. Doch geht es dabei allein um das Läutern der Glasschmelze, während es im vorliegenden Falle um das Optimieren des Erschmelzens des Glases geht.

In US 2 261 034 wird die Konstruktion einer speziellen Blasdüse zur Einbringung von Gasen in die Glasschmelze beschrieben. Die Verwendung der Blasdüse dient der Läuterung der Glasschmelze, nicht dem eigentlichen Schmelzprozess.

In US 2 909 005 wird die Verwendung von Boden-Blasdüsen im Bereich der Schmelzwanne zur Erzeugung von Konvektionsströmungen beschrieben. Die Blasdüsen sind dabei in unterschiedlichsten Anordnungen über den Boden der Schmelzwanne verteilt, unter anderem auch in Richtung parallel zur Wannenlängsachse. Allerdings wird nicht beschrieben, welche Anordnungen zu besonders vorteilhaften Ergebnissen führen. Des weiteren wird nicht beschrieben, welche Abstände die Blasdüsen voneinander und in Relation zur Glasstandshöhe haben müssen/dürfen, um besonders vorteilhafte Ergebnisse zu erzielen. Die in den Abbildungen beschriebenen Anordnungen führen zu extrem turbulenten Strömungen, bei denen sich die einzelnen Blasdüsenströmungen aufgrund der geringen Abstände zueinander deutlich beeinflussen und somit zu negativen Ergebnissen führen müssen.

Auch werden keine Ausführungen hinsichtlich der Geometrie der Schmelzanlagen und der davon abhängigen Einbauweise der Blasdüsen beschrieben. Ein minimal notwendiger Abstand zu den Wänden der Glasschmelzwanne wird ebenfalls nicht erwähnt.

In FR 1 303 854 wird die Erzeugung spezieller Konvektionsströmungen in Glasschmelzwannen mittels Elektroden beschrieben, und zwar von zwei Elektrodenreihen.

Es werden keine Ausführungen hinsichtlich der Geometrie der Schmelzanlagen und der davon abhängigen Einbauweise der Elektroden beschrieben. Ein minimal notwendiger Abstand zu den Wänden der Glasschmelzwanne wird ebenfalls nicht erwähnt.

In US 3 305 340 wird die Verwendung kombinierter Elektroden-Blasdüsen in einer Glasschmelzwanne beschrieben. Die Elektroden-Blasdüsen sind entlang der Seitenwände der Glasschmelzwanne in Längsrichtung angeordnet und werden gleichzeitig zum Beheizen der Schmelze und zum Einbringen von Inertgas verwendet.

Durch die Anordnung im Wandbereich soll eine Strömung von der Wand zur Mitte der Glasschmelzwanne erzeugt werden.

Wie allgemein bekannt ist, führt die Anordnung von Blasdüsen in direkter Nähe zu den Wänden von Glasschmelzwannen zu deutlich höherer Korrosion des Wandmaterials und dadurch zur Verkürzung der Lebensdauer der Schmelzwanne.

Durch die Anordnung der Blasdüsen im Randbereich kann des weiteren keine optimale schraubenförmige Strömung erzeugt werden.

In US 3 268 320 werden verschiedene Möglichkeiten zur Erzeugung von Strömungen in Glasschmelzwannen beschrieben. Unter anderem wird die Verwendung von Blasdüsen, angeordnet entlang der Mittelachse der Wanne in Längsrichtung, zur Erzeugung einer schraubenförmigen Strömung beschrieben.

Es wird jedoch nicht beschrieben, welche Abstände die Blasdüsen voneinander und in Relation zur Glasstandshöhe haben müssen/dürfen, um besonders vorteilhafte Ergebnisse zu erzielen.

Auch werden keine Ausführungen hinsichtlich der Geometrie der Schmelzanlagen und der davon abhängigen Einbauweise der Blasdüsen beschrieben. Ein minimal notwendiger Abstand zu den Wänden der Glasschmelzwanne wird ebenfalls nicht erwähnt.

Die Anordnung von zwei oder mehr Reihen Blasdüsen parallel zur Wannenlängsachse wird ebenfalls nicht beschrieben.

In FR 2 787 784 werden unterschiedliche Verfahren zur Erzeugung schraubenförmiger Strömungen in Glasschmelzwannen beschrieben. Unter anderem wird hierbei die Verwendung von Blasdüsen in der Mitte der Wannenbreite zur Ausbildung von einer oder mehreren schraubenförmigen Strömungen beschrieben.

Eine Anordnung von mehreren Blasdüsen entlang der Wannenlängsachse. bzw. mehrere solcher Längsreihen wird nicht beschrieben.

Es wird auch nicht beschrieben, welche Abstände die Blasdüsen voneinander und in Relation zur Glasstandshöhe haben müssen/dürfen, um besonders vorteilhafte Ergebnisse zu erzielen.

In US 2 909 005 wird die Verwendung von Boden-Blasdüsen im Bereich der Schmelzwanne zur Erzeugung von Konvektionsströmungen beschrieben. Die Blasdüsen sind dabei in unterschiedlichsten Anordnungen über den Boden der Schmelzwanne verteilt, unter anderem auch in Richtung parallel zur Wannenlängsachse. Allerdings wird nicht beschrieben, welche Anordnungen zu besonders vorteilhaften Ergebnissen führen. Des weiteren wird nicht beschrieben, welche Abstände die Blasdüsen voneinander und in Relation zur Glasstandshöhe haben müssen/dürfen, um besonders vorteilhafte Ergebnisse zu erzielen. Die in den Abbildungen beschriebenen Anordnungen führen zu extrem turbulenten Strömungen, bei denen sich die einzelnen Blasdüsenströmungen aufgrund der geringen Abstände zueinander deutlich beeinflussen und somit zu negativen Ergebnissen führen müssen.

Auch werden keine Ausführungen hinsichtlich der Geometrie der Schmelzanlagen und der davon abhängigen Einbauweise der Blasdüsen beschrieben. Ein minimal notwendiger Abstand zu den Wänden der Glasschmelzwanne wird ebenfalls nicht erwähnt.

In FR 2 773 555 wird der Einsatz von Unterglasbrennern in einer Glasschmelzwanne beschrieben. Die Unterglasbrenner sind hierbei entlang der Wannenlängsachse angeordnet. Die Unterglasbrenner dienen zur Beheizung bzw. Unterstützung der Beheizung der Glasschmelze, nicht aber zur Erzeugung von schraubenförmigen Strömungen entlang der Wannenlängsachse. Zu ihrem Betrieb sind erhebliche Gasmengen notwendig. Diese liegen über den normalerweise zum Betrieb von Blasdüsen verwendeten Gasmengen. Durch den Einsatz von Unterglasbrennem wird in der Glasschmelze eine Verbrennungszone erzeugt. Diese führt zu Konvektionsströmungen, die jedoch deutlich größer sind, als zur Erzeugung von schraubenförmigen Strömungen in Wannenlängsrichtung von Vorteil wären. Durch den Einsatz von Unterglasbrennern entsteht eine extrem turbulente Strömung, die keinesfalls mit der, in der Erfindung beschriebenen, schraubenförmigen Strömung identisch ist.

Auch werden keine Ausführungen hinsichtlich der Geometrie der Schmelzanlagen und der davon abhängigen Einbauweise der Unterglasbrenner beschrieben. Ein minimal notwendiger Abstand zu den Wänden der Glasschmelzwanne wird ebenfalls nicht erwähnt.

Wichtige oder zweckmäßige Merkmale der Erfindung sollen im Folgenden wiedergegeben werden:
* Anordnung von mehreren Blasdüsen in zwei oder mehr Reihen parallel zur Wannenlängsachse zur Ausbildung von schraubenförmigen Strömungen.
* Minimaler Abstand der Blasdüsen zur Außenwand von 0,4 m bzw. halber Glasstandshöhe zur Vermeidung von erhöhter Korrosion der feuerfesten Wände der Glasschmelzwanne. Wird der Abstand zwischen Blasdüsen und Wand geringer gewählt, so kommt es durch die, von den Blasdüsen, erzeugten Strömungswalzen zu einer verstärkten Korrosion der Wand, da die im Bereich der Blasdüsen erzeugten Aufwärtsströmungen nahezu mit gleicher Stärke im Bereich der Wand als Abwärtsströmungen aufgeprägt werden. Bei genügend großem Abstand zwischen Blasdüsen und Wand wird dieser Effekt vermieden, da der Radius der ausgebildeten Strömungswalzen dann kleiner ist, als der Abstand zwischen Blasdüsen und Wand. Die durch die Blasdüsen aufgeprägten Abwärtsströmungen erfolgen dann in einem ausreichend großen Abstand zur Wand. Der maximale Abstand der Blasdüsen von der Wand sollte nicht über dem 1.3fachen des Glasstandes liegen, da sonst die positive Wirkung der Blasdüsen auf die Strömungswalzen durch am Rand durchschießende Strömungen beeinträchtigt wird. Die definierte spiralförmige Bewegung der Glasströmung wird durch zu weite Wandabstände ebenfalls geschwächt.
* Abstand der Blasdüsen untereinander von mindestens 0,8facher Glasstandshöhe, aber maximal 1,5facher Glasstandshöhe. Entgegen der Berechnungen mittels mathematischer Simulationen, wonach besonders enge Abstände der Blasdüsen zu vorteilhaften Ergebnissen führen sollen, zeigt sich in den realen Versuchen überraschenderweise die Notwendigkeit eines definierten Abstandes zwischen den einzelnen Blasdüsen. Bei zu engen Abständen der Blasdüsen voneinander kommt es zu starken Beeinflussungen der Strömungen durch das über die Blasdüsen eingebrachte Gas und dadurch zu undefinierten Strömungen, die letztlich zu Kurzschlussströmungen und somit zu einem negativen Effekt (deutlich verkürzte minimale Verweilzeit) führen. Wichtig für eine gute und homogene Glasqualität sind aber größere Totzeiten, um sicherzustellen, dass auch das Glas, das durch die schnellste Strömung ausgetragen wird und die kürzeste Aufenthaltszeit im Schmelzaggregat besitzt, über eine gute Qualität (keine Blasen, Steinchen, Kristalle, Schlieren, Relikte etc.) verfügt. Bei zu weiten Abständen der Blasdüsen voneinander reichen die lokal durch die Blasdüsen erzeugten Strömungen nicht aus, um eine schraubenförmige Gesamtströmung entlang der Wannenlängsachse zu erzeugen; es kommt zur Ausbildung voneinander isolierter Blasdüsenwalzen, die auf die Gesamtströmung keinen oder wenig Einfluss mehr nehmen können. Die Totzeit verringert sich wieder, und die Schmelzrelikte mehren sich.
* Je nach Geometrie der Glasschmelzwanne sind unterschiedliche Anzahlen von Blasdüsen bzw. Blasdüsenreihen von besonderem Vorteil. Unter Beachtung der genannten Bedingungen hinsichtlich Abstand der Blasdüsen untereinander sowie zu den Außenwänden ergeben sich je nach Glasstandshöhe und Breite der Glasschmelzwanne optimale Anzahlen von Blasdüsenreihen parallel zur Wannenlängsachse. So ist bei einer Wannenbreite von 8 m und einer Glasstandshöhe von 1,4 m die Anordnung von 5 bis 7 Blasdüsenreihen eine optimale Anordnung zur Erzielung des erfindungsgemäßen Effektes.
* Wie allgemein bekannt, kann durch Einbringen von Gas in die Glasschmelze der Redoxzustand der Schmelze manipuliert werden. So führt beispielsweise die Einbringung von Sauerstoff oder Luft zur Oxidation, die Einbringung von Stickstoff oder Helium zur Reduktion der Glasschmelze. Dies ist insbesondere bei der Einstellung der gewünschten Farbe des Glases von großer Wichtigkeit. Es konnte beobachtet werden, dass durch O₂-Bubbling die Blasigkeit der Schmelze am günstigsten beeinflusst werden kann. Man hat zwar nach der Bubblingzone eine größere Blasenzahl - insbesondere da durch die großen aufplatzenden Blasen Sattelitenblasen eingeschlagen werden. Die kleinen Blasen enthalten aber vorwiegend Sauerstoff und werden innerhalb kurzer Zeit wieder resorbiert. Ein ähnliches Verhalten kann bei Heliumbubbling beobachtet werden. Im Gegensatz zu Sauerstoff wird Helium wahrscheinlich nicht chemisch im Glas gelöst, sondern diffundiert physikalisch in die Glasmatrix. Je nach Glastyp kann Wasser noch als Bubblinggas eingesetzt werden, da es ebenfalls sehr gut in der Glasmatrix wieder gelöst werden kann Alle anderen Bubblinggase ― wie Luft, N₂, CO₂, Ar, etc. - sind nachteilig für die Blasenqualität, da die Beseitigung der Restblasen nur über physikalischen Aufstieg der Blasen erfolgen kann und keine Resorption der Gase erfolgt.
* Des weiteren bestehen erhebliche Unterschiede in der Wirkungsweise der eingebrachten Gase in die Glasschmelze sowie des Verhaltens der Gase im weiteren Verlauf des Schmelz- und Läuterprozesses. So sind für oxidierende Schmelzen der Einsatz von Sauerstoff und für reduzierende Schmelzen der Einsatz von Helium besonders empfehlenswert.

Die Vorteile der Erfindung lassen sich wie folgt zusammenfassen:
* Das einzelne Schmelzepartikel gelangt aufgrund der Natur der Strömung in Gestalt einer zum Auslauf fortschreitenden Spirale häufig an die wärmebeaufschlagte Oberfläche. Dabei besteht eine hohe statische Wahrscheinlichkeit, das alle Schmelzepartikel wenigstens annähernd gleich behandelt werden.
* Die thermische Durchmischung ist optimal.
* Die mechanische Durchmischung ist optimal.
* Die Temperatur ist in jeder Schnittebene - quer zur Haupt-Strömungsrichtung gesehen - relativ homogen. Dies bedeutet, dass man die Temperatur örtlich begrenzt beeinflussen kann, ohne dass dies globale Auswirkungen hätte an jenen Stellen, an denen dies unerwünscht ist.
* Praktisch ergeben sich die folgenden Möglichkeiten:
   entweder lässt sich der Durchsatz steigern - bei gleicher Qualität und bei denselben Abmessungen des Gefäßes -
   oder
   die Qualität lässt sich steigern, bei gleichen Abmessungen des Gefäßes und bei gleichem Durchsatz
   oder
   die Abmessungen lassen sich verkleinern, bei gleicher Qualität und gleichem Durchsatz.
* Die Energiebilanz ist günstig.

Die Erfindung ist anhand der Zeichnungen erläutert. Darin ist im Einzelnen folgendes dargestellt:
- Figur 1: zeigt in stark schematisierter Darstellung im Aufriss eine Einschmelzwanne mit Düsen.
- Figur 2: zeigt den Gegenstand von Figur 1 in Draufsicht.
- Figur 3: veranschaulicht wiederum in schematischer Aufrissansicht eine Einschmelzwanne in einem Längsschnitt mit Darstellung der Strömung.
- Figur 4: zeigt den Gegenstand von Figur 3 in einem Querschnitt.
- Figur 5: veranschaulicht eine typische Konstellation einer Einschmelzwanne in perspektivischer Darstellung mit Stromfäden, hervorgegangen aus einer mathematischen Simulation.

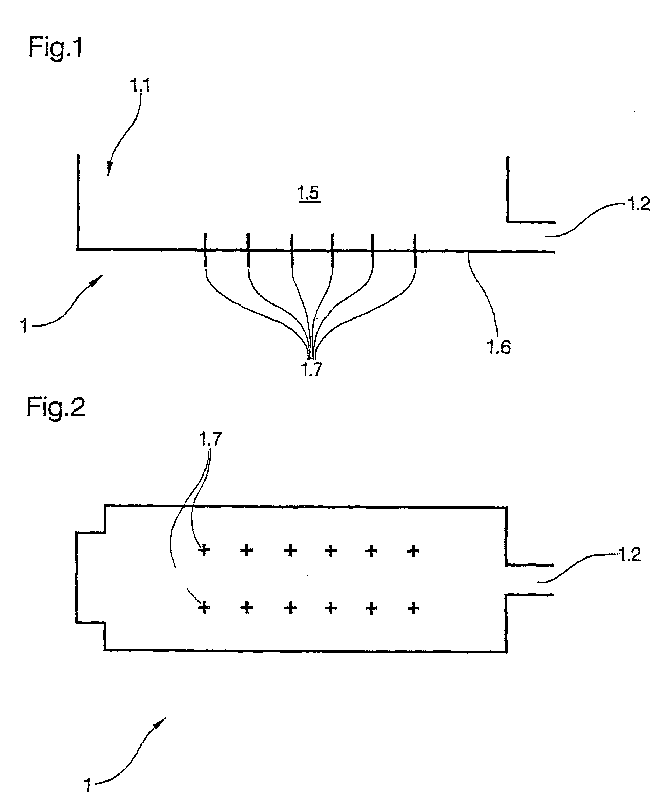

Der in den Figuren 1 und 2 dargestellten Einschmelzwanne 1 werden Gemenge oder Scherben im Bereich eines Einlasses 1.1 zugeführt. Die Schmelze wird durch einen Auslass 1.2 zu den folgenden Prozessschritten weitergeleitet.

Im Boden 1.6 der Einschmelzwanne 1 sind hier nicht dargestellte erfindungsgemäße Düsen 1.7 angeordnet, die gegen den Hauptschmelzraum 1.5 gerichtet sind, und durch die ein Medium, beispielsweise Luft, in die Schmelze eingeblasen wird. Die Düsen sind in zwei Reihen angeordnet. Jede Reihe verläuft in Prozessrichtung, das heißt in jener Richtung, in der sich die Schmelze in Gestalt einer spiraligen Strömung bewegt, und zwar vom Einlass 1.1 zum Auslass 1.2.

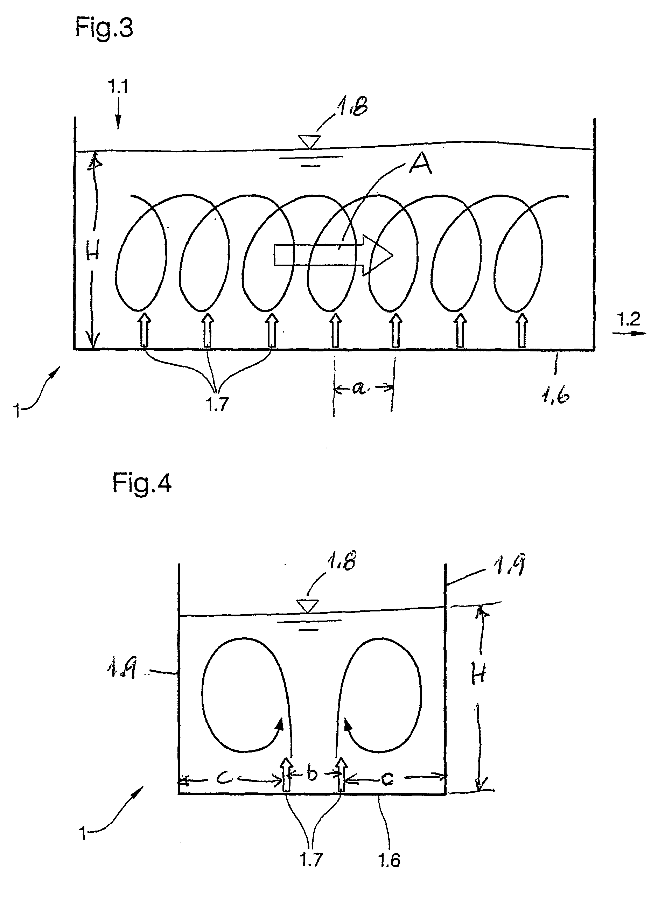

Die spiralige Strömung ist aus den Figuren 3 und 4 erkennbar. Man erkennt auch hierbei wieder die Düsen 1.7 im Boden 1.6 der Einschmelzwanne 1.

In Figur 3 ist die Hauptströmungsrichtung durch den Pfeil A veranschaulicht.

Man erkennt hieraus die Glasstandshöhe H. Dies ist das Maß zwischen dem Boden 1.6 der Wanne 1 (schmelzeberührte Bodenfläche) vom Spiegel 1.8 der Schmelze. Gemäß der Erfindung soll der gegenseitige Abstand a der zwei einander benachbarter Blasdüsen - in Hauptströmungsrichtung gesehen - gemäß der Erfindung wenigstens das 0,5fache der Glasstandshöhe betragen, besser noch wenigstens das 0,8fache. Der Abstand sollte aber kleiner sein, als das 1,2fache der Glasstandshöhe. Er sollte auf jeden Fall kleiner sein als das 1,5fache der Glasstandshöhe.

Figur 4 lässt die Verhältnisse im Querschnitt erkennen, und auch die hierbei relevanten Maße. Dabei erkennt man den gegenseitigen Abstand b zwischen den beiden Reihen von Düsen 1.7, ferner den Abstand c zwischen einer Düse 1.7 der einen Reihe und der nächstgelegenen Längsseitenwand 1.9.

Für das Maß b gelten annähernd die Angaben wie für das Maß a.

Für das Maß c gilt, dass dieses etwa gleich der halben Glasstandshöhe H sein soll.

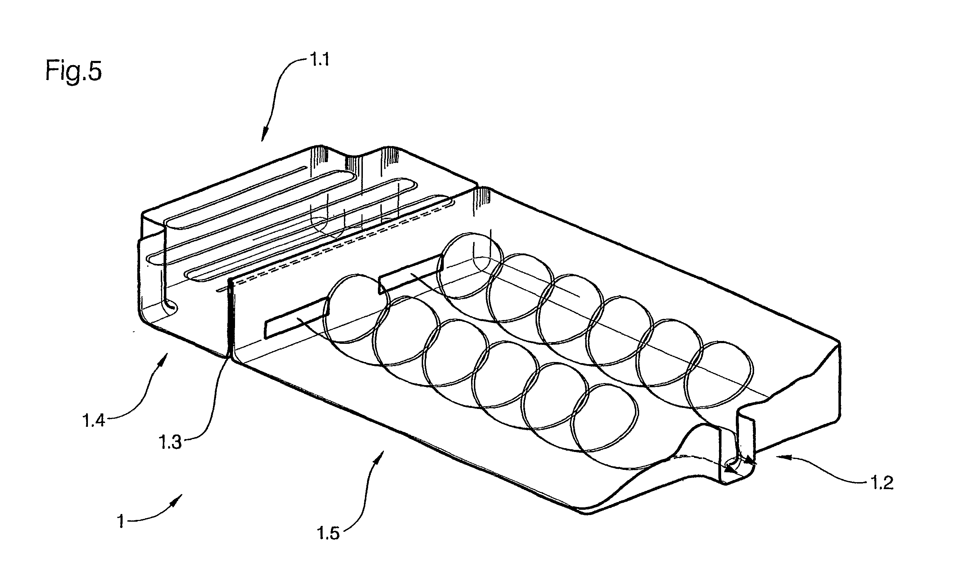

Die in Figur 5 dargestellte Einschmelzwanne 1 weist wiederum einen Einlass 1.1 sowie einen Auslass 1.2 auf. Die Wanne 1 weist einen zusätzlichen Brückenwall 1.3 mit zwei Durchlässen am Boden auf, der die sogenannte Rauhschmelze vom Hauptschmelzraum 1.5 abtrennt. Dem Hauptschmelzraum 1.5 sind wieder zwei Reihen von Düsen zugeordnet, die hier nicht erkennbar sind. Jede Düsenreihe umfasst sechs Düsen, die entsprechende, hier erkennbare Spiralwirbel erzeugen.

### Bezugszeichenliste

- 1: Einschmelzwanne
- 1.1: Einlass der Einschmelzwanne 1 (Doghouse-Bereich)
- 1.2: Auslass der Einschmelzwanne 1
- 1.3: Brückenwall
- 1.4: Rauhschmelze
- 1.5: Hauptschmelzraum
- 1.6: Boden der Einschmelzwanne
- 1.7: Düsen
- 1.8: Schmelzespiegel
- 1.9: Längsseitenwand
- A: Haupt-Strömungsrichtung
- H: Glasstandshöhe
- a: gegenseitiger Düsenabstand in Haupt-Strömungsrichtung
- b: gegenseitiger Düsenabstand in Quer-Richtung
- c: Abstand Düse - Wand

## Patentansprüche

1. Verfahren zum Herstellen und/oder Aufbereiten einer Glasschmelze, mit den folgenden Merkmalen:
die Schmelze strömt in einem Gefäß (1) in einer Haupt-Strömungsrichtung (A), wobei sich der Spiegel der Schmelze in einer gewissen Glasstandshöhe H über der Bodenfläche (1.6) des Gefäßes (1) befindet; **gekennzeichnet durch** die folgenden Merkmale:
es werden in die Schmelze Strahlen eines fließfähigen Mediums derart eingeleitet, dass die Schmelze entlang spiraliger Bahnen strömt, und dass die Achsen der Spiralen parallel oder annähernd parallel zur Haupt-Strömungsrichtung (A) verlaufen;
einander benachbarte Einleitungsstellen der Strahlen haben - in der Haupt-Strömungsrichtung (A) gesehen - einen gegenseitigen Abstand, der mindestens das 0,5fache der Glasstandshöhe H beträgt.

2. Verfahren nach Anspruch 1, **dadurch gekennzeichnet, dass** der gegenseitige Abstand einander benachbarter Einleitungsstellen der Strahlen mindestens das 0,8fache der Glasstandshöhe H beträgt.

3. Verfahren nach Anspruch 1 oder 2, **dadurch gekennzeichnet, dass** der gegenseitige Abstand einander benachbarter Einleitungsstellen der Strahlen in Strömungsrichtung höchstens das 1,5fache der Glasstandshöhe H beträgt.

4. Verfahren nach einem der Ansprüche 1 bis 3, **dadurch gekennzeichnet, dass** als Medium ein Gas wie Luft oder Sauerstoff oder Stickstoff oder Helium verwendet wird.

5. Verfahren nach einem der Ansprüche 1 bis 4, **dadurch gekennzeichnet, dass** Mediumstrahlen parallel zur Haupt-Strömungsrichtung (A) in die Schmelze eingeleitet werden.

6. Verfahren nach einem der Ansprüche 1 bis 5, **dadurch gekennzeichnet, dass** die Mediumstrahlen gepulst aufgebracht werden.

7. Vorrichtung zum Herstellen und/oder Behandeln einer Glasschmelze;
mit einem Gefäß (1), das einen Auslauf aufweist, zu dem die Glasschmelze entlang einer Haupt-Strömungsrichtung (A) strömt, **gekennzeichnet durch** die folgenden Merkmale:
mit einer Anzahl von Düsen (1.7), die derart gestaltet und angeordnet sind, dass die Strömung der Glasschmelze einen spiraligen Verlauf hat, wobei die Achsen der Spirale parallel oder annähernd parallel zur Haupt-Strömungsrichtung (A) verlaufen;
mit unter Druck stehenden Mediumquellen, die an die Düsen (1.7) angeschlossen sind;
die einander benachbarten Düsen (1.7) haben - in Haupt-Strömungsrichtung (A) gesehen - einen gegenseitigen Abstand, der mindestens das 0,5fache der Glasstandshöhe H beträgt.

8. Vorrichtung nach Anspruch 7, **dadurch gekennzeichnet, dass** einander benachbarte Düsen (1.7) - in Haupt-Strömungsrichtung (A) gesehen - einen gegenseitigen Abstand aufweisen, der mindestens das 0,8fache der Glasstandshöhe H beträgt.

9. Vorrichtung nach Anspruch 7 oder 8, **dadurch gekennzeichnet, dass** einander benachbarte Düsen (1.7) - in Haupt-Strömungsrichtung (A) gesehen - einen gegenseitigen Abstand aufweisen, der höchstens das 1,5fache der Glasstandshöhe H beträgt.

10. Vorrichtung nach einem der Ansprüche 7 bis 9, **dadurch gekennzeichnet, dass** das Gefäß (1) eine Schmelzwanne ist.

11. Vorrichtung nach Anspruch 10, **dadurch gekennzeichnet, dass** das Gefäß (1) eine offene oder eine geschlossene Rinne ist.

12. Vorrichtung nach einem der Ansprüche 7 bis 11, **dadurch gekennzeichnet, dass** zwei oder mehrere Reihen von Blasdüsen (1.7) vorgesehen sind.

13. Vorrichtung nach einem der Ansprüche 7 bis 12, **dadurch gekennzeichnet, dass** der Abstand c zwischen einer Längsseitenwand (1.9) und einer Düse (1.7) der benachbarten Düsenreihe in der Größenordnung der halben Glasstandshöhe (H) liegt.

## Claims

1. A method for producing and/or preparing a glass melt, comprising the following features: the melt flows into a vessel (1) in a main direction of flow (A), with the liquid level of the melt being situated at a certain height H of glass level above the floor surface (1.6) of the vessel (1); **characterized by** the following features: jets of a free-lowing medium are introduced into the melt in such a way that the melt flows along spiral paths and that the axes of the spirals extend parallel or approximately parallel to the main direction of flow (A); mutually adjacent introduction points of the jets have a mutual distance, as seen in the main direction of flow (A), which is at least 0.5 times the height H of glass level.

2. A method according to claim 1, **characterized in that** the mutual distance of mutually adjacent introduction points of the jets is at least 0.8 times the height H of glass level.

3. A method according to claim 1 or 2, **characterized in that** the mutual distance of mutually adjacent introduction points of the jets is not more than 1.5 times the height H of glass level.

4. A method according to one of the claims 1 to 3, **characterized in that** a gas such as air or oxygen or nitrogen or helium is used as a medium.

5. A method according to one of the claims 1 to 4, **characterized in that** the medium jets are introduced into the melt parallel to the main direction of flow (A).

6. A method according to one of the claims 1 to 5, **characterized in that** the medium jets are applied in a pulsed way.

7. An apparatus for producing and/or treating a glass melt; comprising a vessel (1) having an outlet to which the glass melt flows along a main direction of flow (A); **characterized by** the following features: with a number of nozzles (1.7) which are configured and arranged in such a way that the flow of the glass melt has a spiral course, with the axes of the spiral extending parallel or approximately parallel to the main direction of flow (A); with pressurized medium sources which are connected to the nozzles (1.7); with the mutually adjacent nozzles (1.7) having a mutual distance as seen in the main direction of flow (A) which is at least 0.5 times the height H of the glass level.

8. An apparatus according to claim 7, **characterized in that** mutually adjacent nozzles (1.7) have a mutual distance as seen in the main direction of flow (A) which is at least 0.8 times the height H of the glass level.

9. An apparatus according to claim 7 or 8, **characterized in that** mutually adjacent nozzles (1.7) have a mutual distance as seen in the main direction of flow (A) which is not more than 1.5 times the height H of the glass level.

10. An apparatus according to one of the claims 7 to 9, **characterized in that** the vessel (1) is a melting end.

11. An apparatus according to claim 10, **characterized in that** the vessel (1) is an opened or closed groove.

12. An apparatus according to one of the claims 7 to 11, **characterized in that** two or more rows of blast nozzles (1.7) are provided.

13. An apparatus according to one of the claims 7 to 12, **characterized in that** the distance c between a longitudinal side wall (1.9) and a nozzle (1.7) of the adjacent nozzle row is within the magnitude of half the height H of the glass level.

## Revendications

1. Procédé pour fabriquer et/ou préparer une masse de verre en fusion ayant les particularités suivantes :
la masse en fusion coule dans un récipient (1) suivant un sens d'écoulement principal (A), le niveau de la masse de verre en fusion se situant à une certaine hauteur H au-dessus du fond (1.6) du récipient (1) ; **caractérisé par** les particularités suivantes :
on introduit dans la masse en fusion des jets d'un fluide de telle sorte que la masse en fusion s'écoule le long de trajectoires en spirale et que les axes des spirales sont parallèles ou approximativement parallèles au sens d'écoulement principal (A) ;
les endroits voisins auxquels les jets sont introduits ont, vus dans le sens d'écoulement principal (A), un écartement entre eux qui fait au moins 0,5 fois le niveau de la masse de verre en fusion à la hauteur H.

2. Procédé selon la revendication 1, **caractérisé en ce que** l'écartement entre les endroits voisins auxquels les jets sont introduits fait au moins 0,8 fois le niveau de la masse de verre en fusion à la hauteur H.

3. Procédé selon la revendication 1 ou 2, **caractérisé en ce que**, dans le sens d'écoulement, l'écartement maximum entre les endroits voisins auxquels les jets sont introduits correspond à 1,5 fois le niveau de la masse de verre en fusion à la hauteur H.

4. Procédé selon l'une quelconque des revendications 1 à 3, **caractérisé en ce que** le fluide utilisé est un gaz tel que de l'air ou de l'oxygène ou de l'azote ou de l'hélium.

5. Procédé selon l'une quelconque des revendications 1 à 4, **caractérisé en ce que** des jets de fluide sont introduits dans la masse en fusion parallèlement au sens d'écoulement principal (A).

6. Procédé selon l'une quelconque des revendications 1 à 5, **caractérisé en ce que** les jets de fluide que l'on applique sont pulsés.

7. Dispositif pour fabriquer et/ou préparer une masse de verre en fusion ; avec un récipient (1) comportant un orifice de sortie vers lequel s'écoule la masse de verre en fusion suivant un sens d'écoulement principal (A), **caractérisé par** les particularités suivantes :
avec un nombre de buses (1.7) qui sont conformées et disposées de telle sorte que la masse de verre en fusion s'écoule en spirales, les axes des spirales étant parallèles ou approximativement parallèles au sens d'écoulement principal (A) ;
avec des sources de fluide sous pression qui sont raccordées aux buses (1.7) ;
les buses voisines (1.7), vues dans le sens d'écoulement principal (A), ont un écartement entre elles qui fait au moins 0,5 fois le niveau de la masse de verre en fusion à la hauteur H.

8. Dispositif selon la revendication 7, **caractérisé en ce que** des buses voisines (1.7), vues dans le sens d'écoulement principal (A), ont un écartement entre elles qui fait au moins 0,8 fois le niveau de la masse de verre en fusion à la hauteur H.

9. Dispositif selon la revendication 7 ou 8, **caractérisé en ce que** l'écartement maximum entre des buses voisines (1,7), vues dans le sens d'écoulement principal (A), correspond à 1,5 fois le niveau de la masse de verre en fusion à la hauteur H.

10. Dispositif selon l'une quelconque des revendications 7 à 9, **caractérisé en ce que** le récipient (1) est un pot de fusion.

11. Dispositif selon la revendication 10, **caractérisé en ce que** le récipient (1) est une rigole ouverte ou fermée.

12. Dispositif selon l'une quelconque des revendications 7 à 11, **caractérisé en ce que** sont prévues deux ou plusieurs rangées de buses de soufflage (1.7).

13. Dispositif selon l'une quelconque des revendications 7 à12, **caractérisé en ce que** l'écartement c entre une paroi (1.9) de la face longitudinale et une buse (1.7) de la rangée de buses voisine est de l'ordre de la moitié du niveau de la masse de verre en fusion à la hauteur H.
